# EUROPÄISCHE PATENTANMELDUNG

(11) **EP 1 623 941 A1**
(43) Veröffentlichungstag der Anmeldung: **08.02.2006**
(21) Anmeldenummer: 04405499.7
(22) Anmeldetag: 05.08.2004
(51) Int. Cl.: B65G 53/52, B65G 53/58

(54) **Vorrichtung und Verfahren zur pneumatischen Beförderung von Schüttgüten im Dichtstromverfahren**

(71) Anmelder: Alcan Technology & Management Ltd., 8212 Neuhausen am Rheinfall (CH)
(72) Erfinder: Ernst, Patrik, 5436 Würenlos (CH)

(57) **Zusammenfassung**

Die Erfindung betrifft eine Vorrichtung zur pneumatischen Förderung eines schüttfähigen Materials im Dichtstromverfahren, enthaltend eine querschnittlich geschlossene Förderleitung (3) mit einem Förderkanal (2), eine Druckgasnebenleitung (4) mit einem Druckgaskanal (18) und Druckgasdurchlassmittel (5) zur Speisung des Förderkanals (2) mit einem Druckgas aus dem Druckgaskanal (18). Die Erfindung zeichnet sich dadurch aus, dass der Förderleitung (3) eine Fluidisiereinrichtung zugeordnet ist, und die Fluidisiereinrichtung einen Fluidisierkörper (6) mit einem Fluidisiergaskanal (8) und Fluidisiergasdurchlassmittel (9) zur Einspeisung eines Fluidisiergases aus dem Fluidisiergaskanal (8) in den Förderkanal (2), enthält.

## Beschreibung

Vorliegende Erfindung bezieht sich auf eine Vorrichtung und ein Verfahren zur pneumatischen Förderung eines schüttfähigen Materials im Dichtstromverfahren nach dem Oberbegriff der unabhängigen Ansprüche. Ferner betrifft die Erfindung die Verwendung der erfindungsgemässen Vorrichtung.

Das Prinzip der pneumatischen Förderung basiert auf der bekannten, physikalischen Grundlage, dass strömende Gase unter bestimmten Voraussetzungen dazu in der Lage ist, schwerere Feststoffe zu tragen und mitzuführen. Bei der pneumatischen Förderung wird dieses Förderprinzip gezielt technisch genutzt. Der Transport erfolgt dabei häufig durch Rohrleitungen. Das Fördermittel ist stets ein Gasstrom, insbesondere ein Luftstrom, der durch einen Druckunterschied zwischen Anfang und Ende der Rohrleitung hervorgerufen wird.

Die pneumatische Förderung wird in den verschiedensten Industriezweigen und bei einer Vielfalt von Schüttgütern angewendet. Man unterscheidet bei pneumatischen Förderanlagen zwischen Saug- und Druck-Förderanlagen. Bei den Druck-Förderanlagen unterscheidet man ferner zwischen Dünnstromförderung, auch Flugförderung genannt, und Dichtstromförderung.

Bei der Dünnstromförderung wird das Fördergut in einem pneumatischen Flugfördersystem unter Einsatz grosser Luftmengen durch Anwendung eines Gebläsedruckes bei hohen Luftgeschwindigkeiten von ca. 20 bis 40 m/s in relativ kleinen Mengen im Schwebe- oder Springverfahren gefördert. Die Geschwindigkeit des Fördergases ist hierbei erheblich grösser als die Sinkgeschwindigkeit der Schüttgutteilchen, so dass das Schüttgut aufgewirbelt und als annähernd vollkommen vermischte Gas-Feststoffströmung im stationären Zustand kontinuierlich durch die Förderleitung bewegt wird. Der Druckverlust im Fördergas ergibt sich aus der Fluidreibung des Fördergases, der Gewichtskraft des Fördergutes, sowie einem Anteil an Feststoff-Wand-Reibung. Dieser Förderzustand lässt sich ähnlich einer Gasströmung beschreiben. So werden bei der Dünnstromförderung Beladungen von rund 1 bis 10 erreicht. Beladung steht für das Mischungsverhältnis von Anzahl "kg" Fördergut pro "kg" Förderluft. Die Druckunterschiede bei der Dünnstromförderung liegen hierzu in der Regel im Bereich von 0.5 bis 1 bar, reichen jedoch in Ausnahmefällen auch bis 4 bar.

Nachteil dieser Fördertechnik ist einerseits das geringe Fördervolumen bezogen auf den eingesetzten Gasstrom und der hohe Verschleiss in den Förderleitungen bei der Förderung abrasiver Schüttgüter wie z.B. Tonerde. Ferner lassen sich auch Schüttgüter, bei denen Kornzerstörung unzulässig ist, bsp. brüchige, kristall- oder granulatartige Schüttgüter, mittels Flugförderung nicht schonend genug transportieren.

Andere Verhältnisse liegen bei der pneumatischen Dichtstromförderung vor, bei welcher die Gasgeschwindigkeiten mit ca. 1 bis 15 m/s, insbesondere 2 bis 10 m/s im Bereich oder niedriger sind als die Sinkgeschwindigkeit der Schüttgutteilchen. Die Bezeichung kennzeichnet den im Vergleich zur Dünnstromförderung höher liegende Feststoffmassenstrom, wobei der Materialtransport hier eher einem "Schieben" nahe kommt. Unter den Begriff Dichtstromförderung fallen unter anderem die Strähnenförderung als Übergangsart, die Ballenförderung und die sogenannte Pfropfenförderung mit einem sehr hohen Feststoffmassenstrom bezogen auf die Förderluftmenge.

Bei der Dichtstromförderung werden Beladungen von höher 10, insbesondere von 30 und mehr erreicht. Die obere Beladungsgrenze kann je nach Fördergut bei rund 150 liegen. Insbesondere bei Pfropfenförderung werden Beladungen von 30 bis 120 erreicht. Die Druckunterschiede bei der Dichtstromförderung liegen über 1 bar, insbesondere im Bereich von 4 bis 8 bar, wobei durchaus auch Druckunterschiede von bis 16 bar möglich sind.

Durch die niedrigen Gasgeschwindigkeiten bilden sich in der Förderleitung Haufwerke in Form von Dünen und geschlossenen Pfropfen. Diese Pfropfen können den Rohrleitungsquerschnitt vollständig ausfüllen. Bei der Pfropfenförderung werden infolge der Luftdurchstömung daher immer wieder Schüttgutpfropfen gebildet, ablöst und beschleunigt.

Hauptvorteil dieser Förderart gegenüber der Flugförderung ist der erheblich reduzierte Abrieb des Schüttguts, sowie ein reduzierter Rohrverschleiss und niedrige Energiekosten aufgrund einer niedrigeren Verdichterleistung.

Nachteilig an diesem Verfahren ist, dass sich das Schüttgut durch das stetigen Bilden und Zerfallen von Pfropfen instationär durch die Förderleitung bewegt, wobei der Druck in der Leitung aufgrund eines Pfropfen häufig so lange ansteigt, bis der Pfropfen ruckartig durch die Förderleitung weiterbewegt wird. Durch das Entspannen des unter Druck stehenden Gasvolumens vor dem Pfropfen wird eine hohe Pfropfengeschwindigkeit erreicht, welche sogar über der Gasgeschwindigkeit liegen kann und unter Umständen zu einer geschossartigen Fortbewegung des Pfropfens führt.

Um die oben genannten Nachteile zu überwinden, ist man dazu übergegangen, über parallele Bypass-Leitungen Druckgas in die Förderleitung einzuspeisen. Der seitlich aus der Bypassleitung in die Förderleitung geführte Gasstrom bewirkt den Abbau von Schüttgutverdichtungen, wodurch einer Dünen- oder Pfropfenbildung aufgrund der erodierenden Wirkung des Druckgasstroms entgegengewirkt wird. Zusätzlich wird der sich vor dem Pfropfen bzw. der Materialverdichtung bildende Überdruck über die Bypassleitung am Pfropfen vorbei abgeleitet und dem Förderkanal hinter dem Propfen wieder zugeführt und aufgeteilt. Verdichtungen und Pfropfen werden überdies durch das in den Förderkanal einströmende Druckgas fortlaufend erodiert.

Durch diese Massnahme kann die Förderkapazität im Dichtstromverfahren erhöht und der Verschleiss weiter vermindert werden. Ferner ermöglicht die zusätzliche Druckgasnebenleitung nach einem Förderunterbruch die (schonende) Wiederaufnahme der Förderung bei gefüllter Förderleitung. Dennoch wird das Fördergut auch nach obigem Verfahren instationär durch die Förderleitung bewegt, da weiterhin Schüttgutverdichtungen im Massenstrom auftreten.

Aufgabe vorliegender Erfindung ist es daher, eine Vorrichtung und Verfahren zur pneumatischen Beförderung eines Schüttgutes im Dichtstromverfahren vorzuschlagen, welche den Transport eines Schüttgutes im Dichtstromverfahren möglichst ohne bzw. mit reduzierter Pfropfenbildung und geringeren Materialverdichtungen erlaubt.

Die Aufgabe wird durch die kennzeichnenden Merkmale der unabhängigen Ansprüche gelöst. Besondere Ausführungsformen der Erfindung werden durch die abhängigen Ansprüche beschrieben.

Die Vorrichtung zeichnet sich dadurch aus, dass der Förderleitung eine Fluidisiereinrichtung zugeordnet ist, und die Fluidisiereinrichtung einen Fluidisierkörper mit einem Fluidisiergaskanal und Fluidisiergasdurchlassmittel zur Einspeisung eines Fluidisiergases aus dem Fluidisiergaskanal in den Förderkanal, enthält.

Querschnittlich geschlossene Förderleitung bedeutet, dass diese zur freien Umgebungsatmosphäre hin geschlossen ist und kein direkter Luftaustausch zwischen der Förderleitung und der Umgebungsatmosphäre stattfinden kann.

Unter schüttfähigem Material sind insbesondere staubförmige, pulverförmige, feinkörnige, körnige, pelletförmige oder granulatförmige Schüttgüter zu verstehen. Das besagte Schüttgut ist bevorzugt ein trockenes Schüttgut und besteht aus einer Ansammlung fester Teilchen von bsp. rundlicher, kugelförmiger, plättchenförmiger, nadelförmiger oder eckiger Gestalt. Die Grösse der Schüttgut-Teilchen sind bevorzugt im wesentlichen uniform. Die mittels erfindungsgemässer Vorrichtung geförderten Schüttgüter können Korngrössen von bis 20 mm mit einem Fein- oder Staubanteil von z.B. > 2 % aufweisen. Die Schüttgut-Teilchen weisen bevorzugt eine durchschnittliche Korngrösse von ≤ 2 mm, insbesondere von 0.04 bis 1 mm auf.

Die Druckgasnebenleitung bzw. Druckgaskanal ist bevorzugt innerhalb, insbesondere in der oberen Querschnittshälfte des Förderkanals bzw. der Förderleitung, angeordnet bzw. geführt. Die Begriffe "oben" und "unten" sind hier im Sinne der räumlichen Anordnung im Schwerkraftfeld zu verstehen. Die Druckgasnebenleitung ist bevorzugt im Scheitelbereich der oberen Querschnittshälfte des Förderkanals angeordnet. Die Druckgasnebenleitung bzw. der Druckgaskanal kann jedoch auch ausserhalb des Förderkanals (obenseitig) angeordnet sein.

Die Druckgasdurchlassmittel sind zweckmässig aus einem nachfolgend umschriebenen, gasdurchlässigen Material, welches ein Entweichen des Druckgases aus der Druckgasnebenleitung in den Förderkanal unter Erzeugung eines Gasstromes erlaubt. Die Gasdurchlässigkeit kann bsp. durch Kleinstöffnungen, Poren, Löcher, Schlitze oder Perforationen im Gasdurchlasskörper erreicht werden.

Das gasdurchlässige Material kann bsp. aus einem gesinterten Metall, wie Sinterbronce oder Sintereisen oder aus einem gesinterten Keramikmaterial, wie Aluminiumoxid, sein. Das poröse Material kann auch aus einem Drahtgeflecht, aus einem porösen Keramikmaterial, einem gelochten, geschlitzten bzw. perforierten Material, wie einem Blech, einer Platte, oder einem Rohr aus Metall oder Kunststoff sein. Ferner kann das Material auch aus einem permporösen Kunststoff sein.

Das gasdurchlässige Material kann ferner auch aus einem textilen Flächengebilde sein, wie z.B. Vlies, Gewebe, Gelege, Geflecht, Matte, Gestrick, Gestick oder Gewirk. Die zum textilen Flächengebilde verarbeiteten Fasern können organische Fasern, wie Naturfasern oder Kunststofffasern, z.B. Polyesterfasern, oder anorganische Fasern, wie Glasfasern oder Kohlenstoff- (Aramid-) Fasern, Metallfasern oder Keramikfasern, wie Aluminiumoxid, sein. Es können auch Mischfasern eingesetzt werden.

Die Druckgasnebenleitung enthält bevorzugt Gasdurchlassöffnungen in Form von Lochungen oder Schlitzen, durch welche das Druckgas aus der Druckgasnebenleitung in den Förderkanal strömen kann. Die Lochungen oder Schlitze können bsp. in Abständen von 3 bis 10 cm entlang der Förderrichtung angeordnet sein. Die Lochungen können bsp. einen Durchmesser von 0.1 bis 2 mm aufweisen. Die Durchmesser der Durchlassöffnungen sind bevorzugt kleiner als die Teilchendurchmesser des Fördergutes. Dem Druckgas kann durch die spezielle Ausgestaltung der Gasdurchlassöffnungen beim Austritt aus der Druckgasnebenleitung eine Richtungskomponente in Förderrichtung mitgegeben werden. Primär dient das Druckgas jedoch der Auflockerung des Fördergutes und nicht der Fortbewegung des Fördergutes.

Die Druckgasnebenleitung kann durchgängig oder abschnittsweise parallel zur Förderleitung geführt sein. Die Druckgasnebenleitung ist besonders bevorzugt eine Druckgasrohrleitung, insbesondere eine Rohrleitung mit ringförmigem Querschnitt. Der innere (kleinste) Durchmesser der Förderleitung entspricht zweckmässig dem 2.5- bis 60-fachen, vorzugsweise dem 3.5- bis 40-fachen, insbesondere dem 4- bis 30-fachen des inneren (kleinsten) Durchmessers der Druckluftnebenleitung.

Unter Rohr sind in nachfolgender Beschreibung neben Leitungen mit rundlichem oder ringförmigem Querschitt insbesondere auch Leitungen mit polygonalem, insbesondere rechteckigem oder quadratischem Querschnitt oder einer Kombination von rundlichen und polygonalen Querschnitt zu verstehen. Grundsätzlich kann der Leitungsquerschnitt beliebig ausgestaltet sein.

Die Druckgasnebenleitung kann auch als Rinnenprofil ausgebildet sein, an dessen offenen Seite die Druckgasdurchlassmittel unter Ausbildung eines geschlossenen Kanals angeordnet und mit dem Rinnenprofil verbunden sind.

Die Druckgasnebenleitung ist bevorzugt in den Förderkanal eingeschoben und mit der Förderleitung über geeignete Befestigungsmittel, wie Schrauben, Nieten, Löten, Schweissen, Klemmen, Kleben etc. verbunden.

Ferner kann der Druckgaskanal auch integraler Bestandteil der Förderleitung sein, indem bsp. die Förderleitung einstückig mit je einem (kleineren) Druckgaskanal und (grösseren) Förderkanal hergestellt wird. Die Trennwand zwischen Druckgaskanal und Förderkanal enthält hierbei die Gasdurchlassmittel bzw. bildet diese aus.

Es ist auch möglich, dass die Druckgasnebenleitung mehrere Druckgaskanäle enthält, welche bsp. durch eine Mehrzahl von parallelen Druckgasrohren gebildet werden.

Als Druckgas wird bevorzugt Luft eingesetzt. Zum Erzeugen oder Verhindern chemischer Reaktionen oder aus andersweitigen Gründen können jedoch auch andere Gase oder Gasgemische, wie z.B. ein Inertgas oder N₂, eingesetzt werden.

Das Druckgas wird über eine Druckgaserzeugungsanlage erzeugt, mit welcher die Druckgasnebenleitung über Zufuhrleitungen verbunden ist. Die genannte Anlage besteht vorzugsweise aus einem oder mehreren Kompressoren, welche das Druckgas auf den gewünschten Druck bringen. Die Druckgaserzeugungsanlage kann auch einen oder mehrere Druckgasspeicher beinhalten.

Die Druckgasnebenleitung kann Mittel, wie Hindernisse, z.B. Querschnittsverengende Einrichtungen bzw. Querschnittsverengungen, zur Einstellung eines Druckgefälles enthalten. Ferner können die Gasdurchlassöffnungen der Druckgasnebenleitung Ventile beinhalten, welche über eine Ventilsteuerung in Abhängigkeit der Druckdifferenzen zwischen Druckgasnebenleitung und Förderleitung bedient werden. Die Druckdifferenzen werden hierbei über Drucksensoren ermittelt.

Die Fluidisiereinrichtung enthält einen Fluidisierkörper mit einem Fluidisiergaskanal. Der Fluidisiergaskanal ist unter anderem über die Fluidisiergasdurchlassmittel zum Förderkanal hin räumlich begrenzt. Der Fluidisierkörper bzw. der Fluidisiergaskanal ist vorzugsweise innerhalb des Förderkanals bzw. der Förderleitung angeordnet. Der Fluidisierkörper ist bevorzugt in der unteren Querschnittsfläche des Förderkanals, insbesondere im Solenbereich der unteren Querschnittsfläche, angeordnet. Der Fluidisierkörper bzw. Fluidisiergaskanal kann auch ausserhalb des Förderkanals (bodenseitig) angeordnet sein.

Die Fluidisiereinrichtung kann in sämtlichen Leitungsabschnitten mit horizontaler Komponente in der Förderrichtung vorgesehen sein. Ferner kann die Fluidisiereinrichtung auch lediglich abschnittsweise an bestimmten Leitungsabschnitten vorgesehen sein, bsp. lediglich an Leitungsabschnitten mit einer positiven Steigung.

Der Fluidisierkörper ist bevorzugt in den Förderkanal eingeschoben und mit der Förderleitung über geeignete Befestigungsmittel, wie Schrauben, Nieten, Löten, Schweissen, Klemmen, Kleben etc. verbunden. Der Fluidisierkörper ist insbesondere über die mittels Schraubverbindungen an die Förderleitung fixierten Fluidisiergaszufuhrleitungen mit der Förderleitung verbunden.

Der Druckgaskanal der Druckgasnebenleitung und der Fluidisiergaskanal der Fluidisiereinrichtung sind bevorzugt entlang einer gemeinsamen Schwerkraftebene (E) angeordnet, welche entlang der Förderleitung verläuft und vorzugsweise den Scheitelpunkt und Sohlenpunkt der Förderleitung schneidet. Die besagte Schwerkraftebene verläuft in Schwerkraftrichtung.

Die Fluidisiergasdurchlassmittel sind zweckmässig aus einem gasdurchlässigen Material, welches unter Ausbildung eines Gasstromes und unter Fluidisierung des im Förderkanal befindlichen Schüttgutes eine (Dauer-) Entweichung des im Fluidgaskanal unter Druck stehenden Gases ermöglicht. Die Gasdurchlässigkeit kann bsp. durch Kleinstöffnungen, Poren, Löcher, Schlitzen oder Perforationen im Gasdurchlasskörper erreicht werden.

Durch die Ausgestaltung der Fluidisiergasdurchlasskörper, insbesondere die Ausgestaltung der Fluidisiergasdurchlässe, und/oder die Anordnung der Fluidisiergasdurchlasskörper, insbesondere der Anordnung der Fluidisiergasdurchlässe, wird sichergestellt, dass die feste Phase in jedem Betriebszustand des Fördersystems nicht in den Fluidisiergaskanal entweichen kann. So kann die Grösse der Fluidiergasdurchlässe so ausgestaltet sein, dass die Fördergutteilchen nicht durch die Öffnungen in den Fluidgaskanal dringen oder die Öffnungen selbst verstopfen können. Ferner kann die Ausrichtung der Fluidisiergasdurchlässe solcherart sein, dass die Fördergutteilchen nur durch eine Bewegung entgegen der Schwerkraft durch die Öffnungen in den Fluidisiergaskanal gelangen können.

Der Fluidisiergaskörper bzw. die Fluidisiergasdurchlassmittel sind vorzugsweise dergestalt, dass das Fluidisiergas gleichmässig verteilt in den Förderkanal gespeist wird und so für eine flächige Fluidisierung des Fördergutes sorgt.

Das gasdurchlässige Material kann bsp. aus einem gesinterten Metall, wie Sinterbronce oder Sintereisen oder aus einem gesinterten Keramikmaterial, wie Aluminiumoxid, sein. Das poröse Material kann auch aus einem Drahtgeflecht, aus einem porösen Keramikmaterial, einem gelochten bzw. perforierten oder geschlitzten Material, wie einem Blech, einer Platte, oder einem Rohr aus einem Metall oder Kunststoff sein.

Die Fluidisiergasdurchlassmittel können bsp. eine mit Lochungen oder Perforierungen versehene Wandung des Fluidisiergaskanals beinhalten. Ferner kann das Material auch aus einem permporösen Kunststoff sein.

Das gasdurchlässige Material kann ferner auch aus einem textilen Flächengebilde sein, wie z.B. Vlies, Gewebe, Gelege, Geflecht, Matte, Gestrick, Gestick oder Gewirk. Die zum textilen Flächengebilde verarbeiteten Fasern können organische Fasern, wie Naturfasern oder Kunststofffasern, z.B. Polyesterfasern, oder anorganische Fasern, wie Glasfasern oder Kohlenstoff- (Aramid-) Fasern, Metallfasern oder Keramikfasern, wie Aluminiumoxid, sein. Es können auch Mischfasern eingesetzt werden.

Die Fluidisiereinrichtung kann Umlenkmittel zum Umlenken des durch die Fluidisiergasdurchlassmittel aus dem Fluidisiergaskanal in den Förderkanal austretenden Fluidisiergases enthalten. Die Umlenkmittel sind zweckmässig derart angeordnet, dass das umgelenkte Fluidisiergas wenigstens eine Richtungskomponente entgegen der auf die Schüttgutteilchen wirkenden Schwerkraft, d.h. eine steigende Tendenz, aufweist.

Die Umlenkmittel sind ferner vorzugsweise derart angeordnet, dass diese das Fluidisiergas unmittelbar nach dem Austritt aus dem Fluidisiergaskanal und bevor dieses fluidisierwirksam wird umlenken.

Bei der Verwendung von Umlenkmitteln sind die Gasdurchlässe im Fluidisierkörper zweckmässig derart ausgerichtet, dass das in den Förderkanal ausströmende Fluidisiergas eine in Schwerkraftrichtung weisende Richtungskomponente, d.h. eine sinkende Tendenz, beinhaltet. Das Fluidisiergas strömt hier bevorzugt seitlich schräg nach unten aus dem Fluidisiergaskanal aus.

Die Umlenkmittel enthalten bevorzugt Umlenkelemente mit ebenen, konkaven oder konvexen Umlenkoberflächen. Dies können bsp. Umlenkbleche oder Umlenkplatten sein. Die Umlenkmittel können bsp. als (Halb-) Schalenelemente ausgebildet sein. Ferner können die Umlenkelement auch durch die Wand des Förderkanals selbst ausgebildet sein.

Das Fluidisiergas wird vorzugsweise in einer Vielzahl von feinen, dünnen, aus Öffnungen des Fluidisierkörpers austretenden Gasströmen auf die Umlenkmittel geführt, wobei die Umlenkmittel dergestalt sind, dass die Gasströme eine Ablenkung und vorzugsweise gleichzeitig eine Streuung erfahren, so dass das Fördergut durch die abgelenkten und gestreuten Gasströme breitflächig und gleichmässig fluidisiert wird. Die Streuung der Gasströme kann durch spezifische Ausgestaltung der umlenkenden Oberflächen, insbesondere durch Anbringen von Rauhigkeitsmustern, weiter gefördert werden.

Die Fluidisiereinrichtung umfasst in einer bevorzugten Ausführungsvariante ein den Fluidisiergaskanal ausbildendes Fluidisiergasrohr. Die Fluidisiergasdurchlassmittel enthalten gemäss dieser Ausführung Lochöffnungen oder Schlitze in der Wandung des Fluidisiergasrohrs. Die Öffnungen enthalten bevorzugt eine in Schwerkraftrichtung weisende Richtungskomponente, wobei den Öffnungen gegenüber ein Umlenkelement, insbesondere ein Umlenkelement mit konkaver Umlenkoberfläche, angeordnet ist.

Die Durchmesser der Lochöffnungen können 0.04 bis 2 mm betragen. Die Distanz der einzelne Öffnungen zueinander kann 0.5 bis 50 cm, insbesondere 2 bis 20 cm betragen. Die Durchmesser der Durchlassöffnungen sind bevorzugt kleiner als die Durchmesser der Feststoffteilchen.

In einer weiteren Ausführung der Erfindung umfassen die Fluidisiergasdurchlassmittel ein gasdurchlässiges, textiles Flächengebilde. Das textile Flächegebilde ist bevorzugt derart angeordnet, dass das vom Fluidisiergaskanal in den Förderkanal austretende Fluidisiergas eine entgegen der Schwerkraftrichtung gerichtete Richtungskomponente, d.h. eine steigende Tendenz, aufweist. Das Fördergas tritt bevorzugt im wesentlichen vertikal durch das textile Flächengebilde in den Förderkanal aus.

Das textile Flächengebilde ist bevorzugt über entsprechende Besfestigungsmittel wie Klemmen, Nieten, Kleben etc. auf ein offenes Rinnenprofil aufgebracht und bildet mit diesem einen für die feste Phase querschnittlich geschlossenen Fluidisiergaskanal aus.

Das textile Flächengebilde bildet besonders bevorzugt einen sogenannten Fluidisierboden aus, welcher in einem rechten Winkel zur oben genannten Schwerkraftebene (E) steht.

Es ist möglich, dass der Fluidisierkörper mehrere Fluidisierkanäle enthält, bsp. mehrere parallele Fluidisiergasrohre.

Die Förderleitung der erfindungsgemässen Vorrichtung besteht in einer bevorzugten Ausführung der Vorrichtung aus mehreren zusammengesetzten, d.h. gegenseitig gefügten Förderleitungsabschnitten. Die einzelnen Förderleitungsabschnitte können Längen von einigen Metern, bsp. von 1 bis 18 m aufweisen. In der Regel beträgt die Länge eines Förderleitungsabschnittes um die 6 m. Die einzelnen Förderleitungsabschnitte sind hierzu bevorzugt gerade und starr ausgebildet. Allfällige Neigungsänderungen werden bevorzugt über separate Biegeabschnittelemente, welche mit den Leitungsabschnitten, bsp. über Kupplungen, gekoppelt sind, vollzogen. Die Biegeabschnittelemente sind bsp. Gussteile, insbesondere Metall- oder Kunststoffgussteile. Sie können Förderwinkel von grösser 0° und kleiner 180° einschliessen.

Die Förderleitungsabschnitte bilden bevorzugt einen Stoss aus, an welchem diese mittels Kupplungselementen zu einem gasdichten Leitungssystem gekuppelt sind. Die Förderleitungsabschnitte können jedoch auch zusammengesteckt sein oder über andere Verbindungstechniken, wie Schweissen, Löten, Schrauben, Nieten, Kleben, miteinander verbunden sein. Kombinationen verschiedener Verbindungstechniken sind auch denkbar.

Die einzelne oder alle Förderleitungsabschnitte enthalten jeweils einen Fluidisierkörper mit einem Fluidisiergaskanal mit einer oder mehreren Fluidisiergaszufuhröffnungen sowie Fluidisiergasdurchlassmitteln. Der Fluidisierkanal ist bevorzugt vollumfächlich geschlossenen, d.h. insbesondere an den beiden Stirnseiten gasdicht geschlossen. Die Fluidisierkörper der einzelnen Förderleitungsabschnitte sind folglich bevorzugt nicht direkt miteinander verbunden.

Der Fluidisierkörper eines Förderleitungsabschnittes führt in bevorzugter Ausführung der Erfindung nicht über die endseitigen Stirnflächen des Förderleitungsabschnitts hinaus. Der Fluidisiergaskanal bzw. der Fluidisierkörper ist bevorzugt gleich lang oder kürzer als der Förderleitungsabschnitt, so dass sich die Förderleitungsabschnitte problemlos Stoss an Stoss fügen lassen.

Jedem Fluidisierkörper eines Förderleitungsabschnittes sind ein, zwei oder mehrere in den Fluidisiergaskanal mündende Fluidisiergaszuleitungen zugeordnet. Ist der Fluidisierkörper im Förderkanal angeordnet, so durchqueren die Fluidisiergaszuleitungen die Wandung Förderleitung.

Die Fluidisiergaszuleitungen sind über ein Fluidisiergasleitungssystem mit einer Druckgaserzeugungsanlage verbunden. Diese besteht vorzugsweise aus einem oder mehreren Kompressoren, welche das Fluidisiergas auf das gewünschte Druckniveau bringen. Der Druckgaserzeugungsanlage können ferner ein oder mehrere Druckspeicher zugeordnet sein, welche das erzeugte Druckgas zwischenspeichern.

Die Fluidisierkörper mehrerer oder aller Förderleitungsabschnitte können über ein gemeinsames Fluidisiergaszufuhrleitungssystem miteinander verbunden sein und einer zentralen Ansteuerung unterworfen sein. Regelmittel, wie Druckregelventile oder dgl. Mittel mit dazugehöriger Steuerung, können dafür sorgen, dass die einzelnen Fluidisierkörper unabhängig voneinander angesteuert werden können und unabhängig voneinander mit Fluidisiergas versorgt werden können. Ferner können Mittel vorgesehen sein, welche die individuelle Steuerung des Gasdruckes für die einzelnen Fluidisierkörper zulassen.

Die Fluidisierkörper mehrerer oder aller Förderleitungsabschnitte werden bevorzugt über eine gemeinsame Druckgaserzeugungsanlage versorgt. Sie können jedoch auch einzeln oder gruppenweise über mehrere, unabhängig voneinander arbeitende Druckgaserzeugsanlagen versorgt werden.

Weist die Förderleitung eine starke, nach oben entgegen der Schwerkraft gerichtete Biegung auf, insbesondere eine Biegung von rund 90°, so kann im Biegeabschnitt eine zusätzliche Fluidisiereinrichtung vorgesehen sein, welche das Fördergut beim Eintritt in den nach oben weisenden Leitungsabschnitt fluidisiert. In der Regel verlaufen die nach oben weisenden Leitungsabschnitte vertikal. Die Fluidisiereinrichtung ist hierzu im Sohlen- bzw. Fussbereich des Biegeabschnittes angeordnet und enthält eine Fluidisiergaskammer, Fluidisiergasdurchlassmittel sowie Fluidisiergaszufuhrmittel. Die Fluidisiergasdurchlassmittel werden bevorzugt durch ein textiles Flächengebilde gebildet. Es sind jedoch auch andere Fluidisiergasdurchlassmittel, wie oben bereits beschrieben, denkbar. Die Fluidisiergasdurchlassmittel der Fluidisiereinrichtung im Leitungsabschnitt müssen nicht dieselben sein, wie jene im Biegeabschnitt.

Das textile Flächengebilde trennt die Fluidisiergaskammer vom Förderkanal ab und bildet einen sogenannten Fluidisierboden aus. Die Fluidisiereinrichtung ist bevorzugt lösbar und gasdicht an eine bodenwärtige Öffnung im Biegeabschnittelement angeschlossen. Die Verbindung kann über miteinander verschraubten Ringflansche geschehen.

Der Biegeabschnitt kann ein Gussteil, insbesondere ein Metall- oder Kunststoffgussteil sein, welches eine bodenwärtige Öffnung zum Anflanschen der oben beschriebenen Fluidisiereinrichtung enthält. Die Förderleitungsabschnitte sind bsp. mittels Kupplungen an der Eintritts- bzw. Austrittsöffnung des Biegeabschnittes angebracht.

Grundsätzlich kann die oben beschriebene Fluidisiereinrichtung im Biegeabschnitt unabhängig der Existenz einer Fluidisiereinrichtung oder Druckgasnebenleitung im Leitungsabschnitt der Förderanlage vorgesehen sein. Das vorliegend beschriebene Biegeabschnittelement mit Fluidisiereinrichtung ist daher auch als unabhängiger Erfindungsgegenstand zu betrachten. Dieser findet insbesondere Verwendung in einer Dichtstromförderanlage nach der Definition gemäss Beschreibungseinleitung.

Als Fluidisiergas wird bevorzugt Luft eingesetzt. Zum Erzeugen oder Verhindern chemischer Reaktionen oder aus andersweitigen Gründen können jedoch auch andere Gase oder Gasgemische, wie z.B. ein Inertgas oder N₂, eingesetzt werden.

Da sich das Druckgas und das Fluidisiergas im Förderkanal mit dem Fördergas vereinigen, sind diese bezüglich ihrer Zusammensetzung vorzugsweise identisch. Das Druckgas, Fördergas und Fluidisiergas können daher auch aus demselben Pressgaserzeuger (z.B. Kompressor) bzw. Druckgasspeicher stammen. D.h. auch das im Dichtstromverfahren für den Druckaufbau im Sender, siehe unten, benötigte Druck- und Fördergas kann aus demselben Druckgaserzeuger bzw. Druckgasspeicher und somit aus dem demselben Pressgasversorgungsnetz stammen.

Das für die oben genannten Zwecke eingesetzte Pressgas kann, wie bereits erwähnt, in einem oder mehreren voneinander abhängigen oder unabhängigen Druckspeichern, ausgerüstet mit bekannten Regelgeräten, zwischengespeichert werden. Das Pressgas kann via bekannter Druckregelventile, Schaltventile und Einstellungsventile vom Druckgaserzeuger bzw. vom Druckgasspeicher zu seinem Bestimmungsort, d.h. zum Sender, Fluidisiergaskanal, zur Druckluftnebenleitung oder zur Förderleitung geführt werden. Das Pressgas wird dazu zweckmässig über Druckregelventile jeweils auf das entsprechende Druckniveau gebracht und über separate Zufuhrleitungen dem Förderkanal bzw. Sender, dem Fluidisiergaskanal und der Druckluftnebenleitung zugeführt.

Aufgrund des durch die hohen Feststoffkonzentrationen bedingten hohen Druckabfalls längs der Förderleitung, enthält der pneumatische Dichtstromförderer, wie bereits erläutert, einen Druckbehälter, auch Sender genannt, für die Feststoffeingabe in die Förderleitung. Dem Sender sind ferner Mittel zur gleichmässigen oder taktweisen Zufuhr eines Druckgases zwecks Druckaufbau im Druckbehälter zugeordnet. Die Mittel enthalten bsp. einen oder mehrere Kompressoren, eine Druckgasleitung sowie Regelventile und fallweise einen Druckgasspeicher. Die Dichtstromförderanlage ist hierbei ein geschlossenes System mit kontrollierten Druckverhältnissen innerhalb seines Leitungssystems.

Die Füllbegrenzung des Druckbehälters kann durch einen Grenzschalter sichergestellt werden. Mit einer pneumatischen Ventilsteuerung können die Chargen im Druckbehälter genau eingestellt werden. Die Füllbegrenzung des Druckbehälters kann durch Eindosieren oder Einwägen sichergestellt werden. Die Form des Druckbehälters stellt sicher, dass das Schüttgut kontrolliert, gleichmässig und vollständig in die Förderleitung gedrückt wird.

Dem Druckbehälter ist bsp. ein Speicherbehälter oder eine Zuleitung vorgeordnet. Dem Druckbehälter schliesst mittelbar oder unmittelbar die Förderleitung an. Fallweise können im Anschluss an den Druckbehälter Mittel zum gleichmässigen oder taktweisen Einspeisen eines zusätzlichen Fördergases in die Förderleitung vorgesehen sein, was nicht mit der Zufuhr von Druckgas aus der Druckgasnebenleitung zu verwechseln ist. Die Förderleitung endet in einem Verbraucher, welcher bsp. eine Verarbeitungseinrichtung oder ein Speicherbehälter sein kann.

Die Förderleitung, die Druckgasnebenleitung, wie auch der Fluidisierkörper können aus einem Metall, insbesondere Stahl oder Aluminium, oder aus einem druckfesten Kunststoff bestehen. Werden die besagten Leitungen oder Kanäle aus einem Rohr gebildet, so können diese mittels eines Strangpressverfahrens oder aus einem Walzprodukt hergestellt sein. Im letzteren Fall weisen die Rohre Schweissnähte oder Lötstellen auf. Enthält der Fluidisierkörper oder die Druckgasnebenleitung ein Rinnenprofil, so kann dieses ebenfalls mittels eines Strangpressverfahrens oder aus einem Walzprodukt hergestellt sein.

Die Förderleitung bzw. -rohr ist in seinem Querschnitt bevorzugt ringförmig ausgestaltet. Dadurch lassen sich die einzelnen Förderrohrabschnitte mit einfachen Kupplungen gasdicht zu einer Förderleitung zusammenkuppeln. Grundsätzlich kann der Leitungsquerschnitt jedoch beliebig ausgestaltet sein.

Zum Betrieb der Dichtstrom-Förderanlage wird aus einem Vorratsbehälter bzw. über eine Zuleitung Fördergut in den Druckbehälter eingespeist. Der Senderinhalt kann über Niveausonden kontrolliert werden. Unter Ausbildung eines bestimmten Gas-Fördergut-Mischungsverhältnisses wird anschliessend das Fördergas in den Druckbehälter eingespeist. Der Druck im Sender kann über Druckaufnehmer überwacht werden. Als Fördergas wird bevorzugt Luft eingesetzt. Zum Erzeugen oder Verhindern chemischer Reaktionen oder aus andersweitigen Gründen können jedoch auch andere Gase oder Gasgemische, wie z.B. ein Inertgas oder N₂, eingesetzt werden.

Anschliessend wird das unter Druck stehende Fördergut aus dem Sender in die daran anschliessende Förderleitung entlassen. Über eine sensorgeleitete Steuervorrichtung wird sichergestellt, dass das Fördergut kontrolliert, gleichmässig und vollständig in die Förderleitung gedrückt wird.

Über die Druckgasnebenleitung wird zur Auflockerung des Fördergutes und zur Verhinderung oder Verminderung von Materialverdichtungen Druckgas in den oberen Querschnittsbereich des Förderkanals eingespiesen. Die Einspeisung von Druckgas in den Förderkanal des Förderleitungssystems kann temporär oder permanent sowie durchgängig oder abschnittsweise, den lokalen Förderverhältnissen angepasst, erfolgen. Ferner kann das Druckgas gleichmässig, impulsartig oder in wechselnder Stärke eingeleitet werden. Die Einspeisung von Druckgas kann über die gesamte Förderleitung oder punktuell bzw. abschnittsweise erfolgen. Das heisst, das Druckgas wird bloss an Stellen, an denen sich das Schüttgut zu Dünen oder Pfropfen verdichtet eingeblasen. In letzterer Ausführung ist eine entsprechende Steuerung der Druckgaszufuhr über Ventile notwendig. Die entsprechenden Steuersignale können hierzu aus über Drucksensoren im Förderkanal vorgenommenen Druckmessungen ermittelt werden.

Das durch das eingeleitete Druckgas aufgelockerte Fördergut wird durch Einspeisen von Fluidisiergas im unteren, d.h. bodenwärtigen Bereich des Förderkanals fluidisiert. Fluidisieren heisst, dass das Schüttgut durch das eingespiesene Fluidisiergas aufgelockert und in ein Gas-Feststoffgemisch überführt wird, indem die Teilchen durch das vom Boden aufströmende Fluidisiergas entgegen der Schwerkraft angehoben und in einen Schwebezustand überführt werden, wobei zwischen den Teilchen eine Luftschicht entsteht, so dass die innere Reibung des Fördergutes erheblich abnimmt. Das Gas-Feststoffgemisch verhält sich hinsichtlich seines Fliessverhaltens bei Druckdifferenzen innerhalb der Rohrleitung ähnlich einer Flüssigkeit. Das fluidisierte Fördergut fliesst nun unter dem permanent vorhandenen Förderdruck ähnlich einer Flüssigkeit in Transportrichtung zum Verbraucher.

Die Einspeisung von Fluidisiergas in den Förderkanal des Förderleitungssystem kann temporär oder permanent sowie durchgängig oder abschnittsweise, den lokalen Förderverhältnissen angepasst, geschehen. Ferner kann die Einspeisung von Fluidisiergas in die einzelnen Leitungsabschnitte mit den sich ändernden Förderbedingungen während des Fördervorganges ebenfalls ändern. Die Einspeisung von Fluidisiergas kann über die gesamte Förderdauer gleichmässig oder in wechselnder Stärke erfolgen. Da die Fluidisierkörper der einzelnen Förderleitungsabschnitte vorzugsweise nicht direkt zusammenhängen, können über geeignete (Druck-) Sensor- und Steuerungsmittel die Fluidisierbedingungen, wie oben genannt, über die einzelnen Förderleitungsabschnitte unterschiedlich gehalten werden.

Die antreibende Kraft ist im erfindungsgemässen Dichtstromverfahren im Gegensatz zur Flugförderung zu einem bedeutendem Teil der statische Druck, welcher im Druckgefäss und fallweise über Druckgaszuleitung in die Förderleitung aufgebaut wird. Der Antrieb zum Transport des Schüttgutes erfolgt im wesentlichen durch den Druckgradienten innerhalb der Förderleitung. Die Kompression des Gases in der Förderleitung ist daher in der Dichtstromförderung im Gegensatz zur Flugförderung von grosser Bedeutung. Die Zufuhr von Druckgas über die Druckgasnebenleitung und des Fluidisiergases dienen hingegen vorzugsweise ausschliesslich dem Auflockern und Fluidisieren des Fördergutes und nicht oder höchstens in geringem Masse dem Antrieb zum Transport des Fördergutes.

Die Einwirkung eines Überdruckes auf den Verbraucher kann durch vorrichtungs- bzw. verfahrenstechnische Massnahmen vermieden werden, indem der Druck des Förderstromes z.B. bis zu dem an der Einmündung in den Verbraucher herrschenden Druck, in der Regel Atmosphärendruck, abgebaut wird.

Im Gegensatz zur bekannten Förderrinne, auch Airslide oder Fluidisierrinne genannt, welche sich ebenfalls dem Prinzip des Fluidisierens bedient, ist vorliegende Vorrichtung nicht zwingend auf ein geodätisches Gefälle angewiesen.

Vorliegende Vorrichtung und Verfahren entspricht vielmehr einer Art Kombination von Dichtstromförderung und Fliessförderung. Die Gasgeschwindigkeit in Förderrichtung liegt hierbei vorzugsweise im Bereich der Sinkgeschwindikgeit der Teilchen oder darunter.

Der Gasdruck im Fluidisiergaskanal ist hierzu höher als jener im Förderkanal. Gleiches gilt auch für den Gasdruck in der Druckgasnebenleitung, welcher im allgemeinen höher ist als jener im Förderkanal. Weist der Förderkanal eine Verstopfung auf, was im laufenden Betrieb nicht vorkommen sollte, sondern höchstes noch beim Anfahren des Fördervorganges bei einer angefüllten bzw. gefüllten Förderleitung, so kann der sich hinter dem Propfen aufbauende Gasdruck den Gasdruck in der Druckgasnebenleitung übersteigen, so dass das Fördergas in die Druckgasnebenleitung einströmt und den Pfropfen auf diese Weise umgeht.

Der Gasdruck im Fluidisiergaskanal kann höher, gleich oder kleiner sein als jener in der Druckgasnebenleitung. Bevorzugt ist der Gasdruck im Fluidisiergaskanal 0.1 bis 2 bar höher als jener in der Druckgasnebenleitung.

Die Fördergeschwindigkeit ist bevorzugt 15 m/s oder kleiner, insbesondere 10 m/s oder kleiner und vorteilhaft 5 m/s und kleiner sowie bevorzugt 0.1 m/s oder höher, insbesondere 1 m/s oder höher, vorteilhaft 2 m/s oder höher. Die angewendeten Druckdifferenzen zwischen Sender und Verbraucher liegen bevorzugt über 1 bar insbesonder über 2 bar, vorteilhaft über 4 bar sowie bevorzugt unter 20 bar insbesondere unter 10 bar und vorteilhaft unter 8 bar.

Die Beladung gemäss vorliegender Erfindung liegt bevorzugt über 10, insbesondere über 30, vorteilhaft über 40 sowie bevorzugt unter 200, insbesondere unter 160, vorteilhaft unter 80.

Mit der erfindungsgemässen Vorrichtung lässt sich das Fördergut über horizontale, schräge oder senkrechte Strecken abwärts wie auch aufwärts energiegünstig transportieren. Mit der erfindungsgemässen Vorrichtung lassen sich insbesondere Steigungen von grösser 0° bis 20° problemlos überwinden. Ferner lassen sich wie oben beschrieben auch senkrechte Steigungen durch Anordnung einer Fluidisiereinheit im Rohrbogen problemlos überwinden.

Die Förderstrecken können dabei ohne weiteres einige Kilometer, bsp. grösser 0 bis 5 km, betragen. Der innere Durchmesser der Förderleitung kann über ein grosses Spektrum reichen und ist abhängig vom Schüttgut und den geforderten Förderkapazitäten. So kann dieser bsp. 30 bis 750 mm, insbesondere 50 bis 500 mm betragen. Die Druckgasnebenleitung und die Fluidisiereinrichtung sind entsprechend der Grösse des Förderkanals dimensioniert.

Der Fördervorgang kann, ohne den Förderkanal vollständig zu leeren, durch Abbau des Gasdruckes beendet werden. Das in den Förderleitungen verbleibende Material setzt sich unter Verdichtung ab. Die Leitungen bleiben also teilweise gefüllt, so dass unmittelbar nach der Wiederaufnahme des Fördervorganges der Verbraucher mit Fördergut versorgt wird, ohne dass vorab ein zeitraubendes Füllen der Förderleitung notwendig ist.

Beim erneuten Anfahren des Fördervorganges wird das verdichtete Schüttgut durch das aus der Druckgasnebenleitung in den Förderkanal einströmende Druckgas vorab aufgelockert. Das aufgelockerte Fördergut lässt sich in der Folge durch Einspeisung des Fluidisiergases fluidisieren, so dass unmittelbar nach Inbetriebnahme der Anlage die Förderung des Schüttgutes ohne weiteren Massnahmen eingeleitet wird. Ein Leerblasen der Förderleitungen, wie es andere pneumatische Fördersysteme erfordern, ist mit vorliegender, erfindungsgemässer Anlage nicht notwendig. Dies bedingt jedoch, dass der Förderleitung wie beschrieben eine Druckgasnebenleitung zugeordnet ist, da sich das, lokal unter Umständen in grösseren Mengen in der stillgelegten Förderanlage abgesetzte Fördergut alleine durch die Einspeisung eines Fluidisiergases nicht besonders gut oder überhaupt nicht auflockern bzw. fluidisieren lässt.

Die Vorrrichtung und das Verfahren dienen bevorzugt zur Förderung von schüttfähigem Bauxit und Aluminiumoxid bzw. Tonerde in der Aluminiumindustrie. Dies kann bsp. die Überführung von Tonerde von Transportmitteln, wie Schiff oder Fahrzeug, zu einer Lagereinrichtung, wie Silo oder Bunker, oder von einer Lagereinrichtung zu einer Elektrolysehalle sowie zur Speisung der Elektrolysezellen sein. Die besagte Tonerde kann Beimengungen wie Fluoride oder Flussmittel enthalten.

Ferner findet die Vorrichtung und Verfahren auch Verwendung in:
- Kohlekraftwerken zum Transport pulverisierter Kohle oder Asche;
- der chemischen Industrie zum Transport von Kunststoffpulver bzw. -granulat und anderen Schüttgütern;
- der Lebensmittelindustrie, z.B. zum Fördern von schüttfähigen Lebensmitteln, wie Salz, Zucker, Kakaopulver, Mehl, Milchpulver oder feinkörnigem Saatgut;
- der Zement- bzw. Baustoffindustrie zum Transport von z.B. Gips, Zement, Ziegelmehl und Zusatzstoffen, Sand, Quarz, gemahlener Kohle oder Kalk.

Die erfindungsgemässe Vorrichtung bzw. das Verfahren finden z.B. Verwendung zur Beförderung eines Schüttgutes zwischen einem Transportmittel, wie Schiff, Schienen- oder Strassenfahrzeug, und einer Lagereinrichtung, wie (Vorrats-) Silo oder Bunker, oder umgekehrt. Weiters zur Beförderung eines Schüttgutes zwischen zwei Lagereinrichtungen oder zwischen zwei Transportmitteln. Ferner findet die Erfindung Verwendung zur Beförderung eines Schüttgutes zwischen einer Lagereinrichtung bzw. einem Transportmittel und einem Verbraucher, wie Verarbeitungseinrichtung (z.B. Elektrolyseofen).

Im folgenden wird die Erfindung beispielhaft und mit Bezug auf die beiliegenden Zeichnungen näher erläutert. Es zeigen:
- Fig. 1:: Querschnitt durch die Förderleitung einer erfindungsgemässen Vorrichtung gemäss einer ersten Ausführungsvariante;
- Fig. 2:: Querschnitt durch die Förderleitung einer erfindungsgemässen Vorrichtung gemäss einer zweiten Ausführungsvariante;
- Fig. 3:: Längsschnitt durch eine Fluidisiereinrichtung gemäss der ersten Ausführungsvariante;
- Fig. 4:: Seitenansicht einer Fluidisiereinrichtung gemäss der ersten Ausführungsvariante;
- Fig. 5:: Querschnitt durch einen Rohrbogen im Übergang zu einer senkrechten Steigung mit einer darin angeordneten Fluidisiereinrichtung;
- Fig. 6:: schematische Ansicht eines pneumatischen Dichtstromfördersystems.

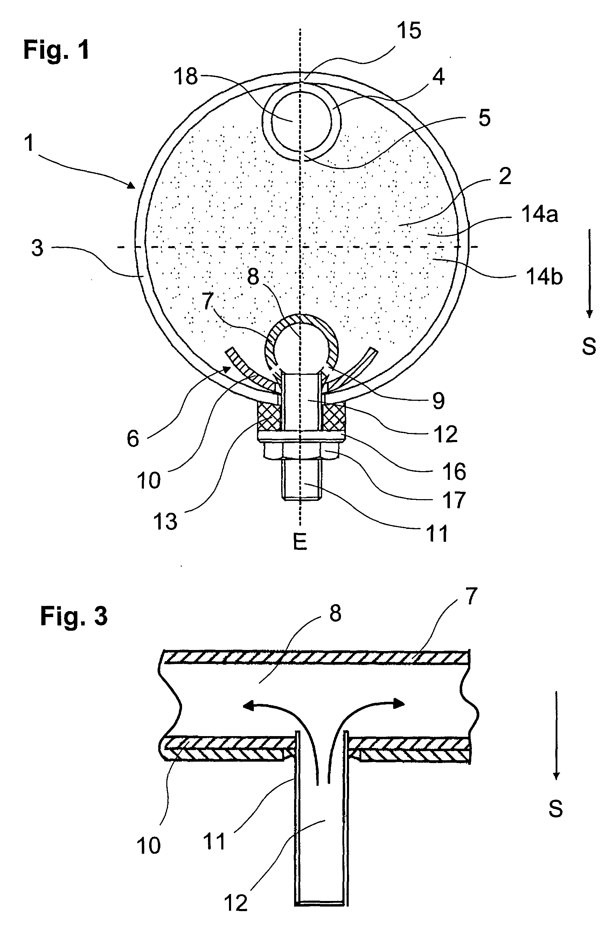

Das erfindungsgemässe pneumatisches Dichtstromfördersystem 1 gemäss einer ersten Ausführungsform (Fig. 1) enthält eine Förderleitung 3 mit einem querschnittlich geschlossenen Förderkanal 2. Der Pfeil (S) zeigt jeweils die Schwerkraftrichtung an.

Im Scheitelbereich 15 der oberen Kanalhälfte 14a ist eine Druckgasrohrleitung 4 mit einem Druckgaskanal 18 und mit Gasdurchlassöffnungen 5 angeordnet. Im Sohlenbereich der unteren Kanalhälfte 14b des Förderkanals 2, d.h. gegenüber der Druckgasrohrleitung 4, ist der Fluidisierkörper 6 der Fluidisiereinrichtung angeordnet. Dieser enthält ein den Fluidisiergaskanal 8 ausbildendes Fluidisierrohr 7 mit Fluidisiergasdurchlassöffnungen 9. Die Fluidisiergasdurchlassöffnungen 9 weisen schräg nach unten, d.h. Sie enthalten eine Richtungskomponente in Schwerkraftrichtung, so dass das aus dem Fluidisiergaskanal ausströmende Gas schräg nach unten austritt und kein Fördergut in den Fluidisierkanal gelangen kann. Der Fluidisierkörper 6 enthält ferner eine Umlenkeinrichtung 10 in Ausführung einer konkaven (Halb-) Schale, welche derart angeordnet ist, dass das austretende Fluidisiergas in den Förderkanal umgelenkt wird und eine Richtungskomponente entgegen der Schwerkraft ausbildet. Die Umlenkeinrichtung 10 enhält ferner Durchgangsöffnungen zum Durchführen der Fluidisiergaszufuhrleitung 11.

Das in einer Vielzahl von feinen, dünnen Gasströmen aus den Öffnungen austretende Fluidisiergas wird während der Umlenkung überdies gestreut, so dass das Fördergut durch das umgelenkte Fluidisiergas breitflächig und gleichmässig fluidisiert wird.

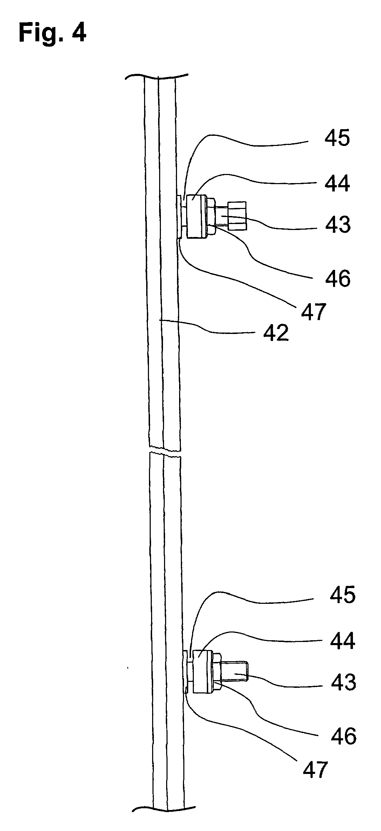

Die Fluidisiereinrichtung enthält ferner eine Fluidisiergaszufuhrleitung 11 mit einem Fluidisiergaszufuhrkanal 12 zur Zufuhr des druckbeladenen Fluidisiergases in den Fluidisiergaskanal 8 (Fig. 3). Die Fluidisiergaszufuhrleitung 11 ist mittels einer Gegenmutter 17 über eine Unterlagsscheibe 16 und einer daran anschliessender Gummidichtung 13 gegen die Förderleitung 3 fixiert. Die Fluidisiergaszufuhrleitung 11 ist mit dem Fluidisierrohr 7 derart verbunden, bsp. verschweisst, dass durch die Fixierung der Fluidisiergaszufuhrleitung 11 an die Förderleitung 3 mittels Gegenmutter auch das Fluidisierrohrr 7 im Förderkanal 2 fixiert wird. Da die Umlenkeinrichtung 10 sandwichartig zwischen den Wänden der Förderleitung 3 und dem Fluidisierrohr 7 eingeklemmt ist, braucht diese nicht zwingend mit dem Fluidisierrohr 7 oder der Förderleitung 3 verbunden zu werden.

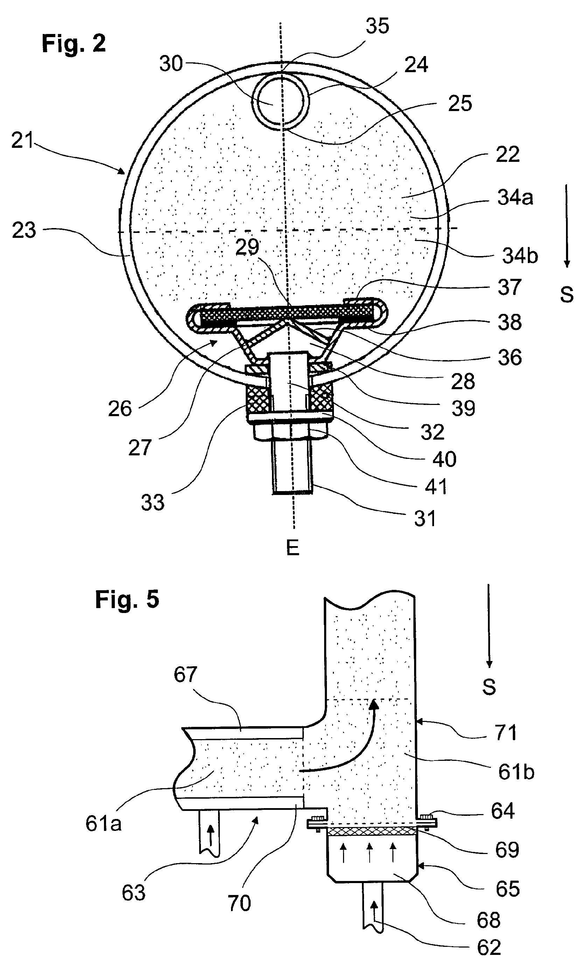

Das erfindungsgemässe pneumatische Dichtstromfördersystem 21 gemäss einer zweiten Ausführungsform (Fig. 2) enthält eine Förderleitung 23 mit einem querschnittlich geschlossenen Förderkanal 22. Im Scheitelbereich 35 der oberen Kanalhälfte 34a ist eine Druckgasrohrleitung 24 mit Druckgaskanal 30 und mit Gasdurchlassöffnungen 25 angeordnet. Im Sohlenbereich der unteren Kanalhälfte 34b des Förderkanals, d.h. gegenüber der Druckgasrohrleitung 24, ist der Fluidisierkörper 26 einer Fluidisiereinrichtung angeordnet. Dieser enthält ein den Fluidisiergaskanal 28 ausbildendes Rinnenprofil 27. Die Fluidisiergasdurchlassöffnungen werden durch ein textiles Flächengebilde 29 ausgebildet, welches am oberen, dem Förderkanal zugewandten Bereich des Fluidisiergaskanals 28 angeordnet ist. Das textile Flächengebilde wird über einen Stützboden 36 getragen, so dass dieses eine plane Fläche, in der Art eines Fluidisierbodens ausbildet, welcher Durchlässe oder Unterbrüche zur Gaszirkulation im Fluidisiergaskanal 28 enthält. Der Stützboden 36 ist im Querschnitt wellenförmig ausgebildet. Das textile Flächengebilde ist seitlich über die gesamte Länge des Rinnenprofils 27 eingebördelt bzw. geklemmt, insbesondere sandwichartig eingeklemmt. Das textile Flächengebilde kann zusätzlich verklebt und/oder verschraubt, bzw. genietet sein. Hierzu werden die längslaufenden seitlichen Endabschnitte 37 des Rinnenprofils 27 umgebogen und klemmend auf das auf einer längslaufenden Schulter- oder Randfläche 38 des Rinnenprofils 27 aufliegende textile Flächengebilde 29 gedrückt.

Der Fluidisiergaskanal 28 wird, wie erwähnt, durch ein gegen oben mit einem textilen Flächengebilde 29 abgeschlossenen Rinnenprofil 27 ausgebildet. Das Rinnenprofil 27 ist bevorzugt aus einem mittels geeigneter Umformtechnik, wie Rollbiegen, in ein Rinnenprofil umgeformtes, metallisches Walzprodukt. Es kann jedoch auch ein Strangpressprofil sein.

Das Fluidisiergas strömt gemäss dieser Ausführungform unter Fluidisierung des Fördergutes entgegen der Schwerkraftrichtung in einer Steigbewegung aus dem Fluidisierkanal 28 durch das textile Flächengebilde 29 hindurch in den Förderkanal 22 hinaus.

Die Fluidisiereinrichtung enthält ferner eine Fluidisiergaszufuhrleitung 31 mit einem Gaszufuhrkanal 32 zur Zufuhr des druckbeladenen Fluidisiergases in den Fluidisiergaskanal 28. Die Fluidisiergaszufuhrleitung 31 ist mittels einer Gegenmutter 41 über eine Unterlagsscheibe 40 und einer daran anschliessenden Gummidichtung 33 gegen die Förderleitung 23 fixiert. Die Fluidisiergaszufuhrleitung 31 ist mit dem Fluidisierkörper 27 derart verbunden, bsp. verschweisst, dass durch die Fixierung der Fluidisiergaszufuhrleitung 31 an die Förderleitung 23 auch der Fluidisierkörper 26 im Förderkanal 22 fixiert wird.

Ein plattenförmiges Auflageelement 39, durch welches die Fluidisiergaszufuhrleitung 31 geführt ist, schafft eine ebene Auflagefläche für das Rinnenprofil 27 und dient gleichzeit als Gegenhalteelement zur Fixierung der Fluidisiergaszufuhrleitung 31. Das Auflageelement 39 ist bsp. quadratisch oder rechteckig ausgebildet und enthält einen Lochdurchgang.

Der in den Figuren 1 und 2 dargestellte Teilchenstrom ist lediglich illustrativer Natur und entspricht nicht zwingend der tatsächlichen Dichteverteilung des Fördergutes im Dichtstrom.

Die Ausführungsformen gemäss Fig. 1 und 2 zeichnen sich durch eine einfache und daher kostengünstige Konstruktion aus. Gleichzeitig erweist sich die Konstruktion auch im abrasiven Millieu als sehr robust und langlebig und ist überdies äusserst reparaturfreundlich.

Fig. 4 zeigt eine Seitenansicht eines Fluidisiergasrohres 42 mit an diesem angebrachten Fluidisiergaszuleitungen 43 gemäss Fig. 1. Zur Montage des Fluidisiergasrohres 42 in die Förderleitung werden die Fluidisiergasrohrabschnitte in die Förderrohrleitungsabschnitte eingebracht und die Fluidisiergaszuleitungen 43 über Lochöffnungen im Fluidisiergasrohrabschnitt nach aussen geführt. Der Fluidisiergasrohrabschnitt wird an die Förderleitung befestigt, indem die Wand der Förderleitung im Spalt 45 zwischen der Gummidichtung 44 und dem Umlenkelement 47 über die Feststellschraube 46 klemmend fixiert wird.

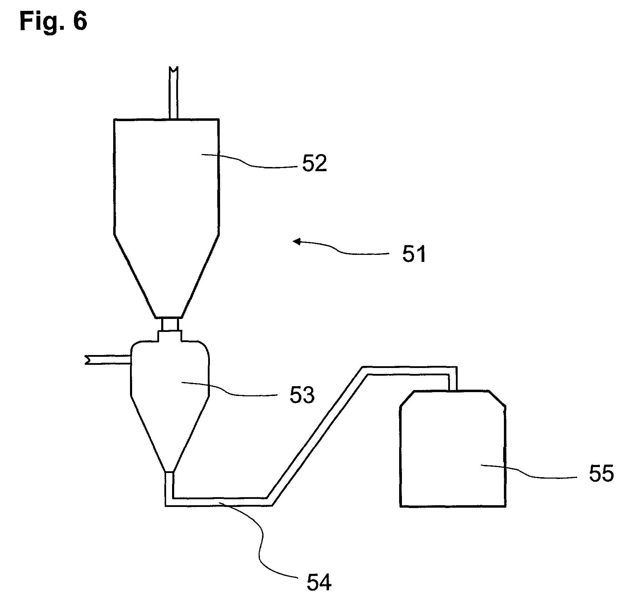

In Biegeabschnitten der Förderleitung ist bevorzugt jeweils eine zusätzliche Fluidisiereinrichtung angeordnet. Der in Fig. 5 schematisch dargestellte Förderleitungsabschnitt 63 weist eine 90° Biegung auf. Im Sohlenbereich des Biegeabschnittelementes 71 ist eine Fluidisiereinrichtung 65 über eine geschraubte Ringflanschverbindung 64 lösbar und gasdicht mit dem Biegeabschnittelement 71 verbunden. Die Fluidisiereinrichtung 65 enthält eine Fluidisierkammer 68, sowie eine Fluidisiergaszufuhrleitung 62. Die Gasdurchlassmittel 69 werden durch ein textiles Flächengebilde ausgebildet. Dieses trennt die Fluidisierkammer 68 vom Förderkanal 61 b des Biegeabschnittes und bildet einen sogenannten Fluidisierboden aus. Der zuführende Förderkanal 61 a enthält ferner eine Fluidisiereinrichtumg 70 sowie eine Druckgasnebenleitung 67 gemäss Erfindung (nur schematisch dargestellt).

Das Biegeabschnittelement kann ein Gussteil, insbesondere ein Metall- oder Kunststoffgussteil sein, welches eine bodenwärtige Öffnung zum Anflanschen der oben beschriebenen Fluidisiereinrichtung enthält. Die Förderleitungsabschnitte sind bsp. mittels Kupplungen an der Eintritts- bzw. Austrittsöffnung des Biegeabschnittelementes angebracht.

Fig. 6 zeigt eine schematisierte Darstellung einer geschlossenen pneumatischen Dichtstromförderanlage 51. Aus einem Lagersilo 52 wird das Fördergut in einen Druckbehälter (Sender) 53 eingespeist und unter Druck in die Förderleitung 54 gedrückt und zum Empfänger 55 transportiert.

## Patentansprüche

1. Vorrichtung zur pneumatischen Förderung eines schüttfähigen Materials im Dichtstromverfahren, enthaltend eine querschnittlich geschlossene Förderleitung (3) mit einem Förderkanal (2), eine Druckgasnebenleitung (4) mit einem Druckgaskanal (18) und Druckgasdurchlassmittel (5) zur Speisung des Förderkanals (2) mit einem Druckgas aus dem Druckgaskanal (18),
**dadurch gekennzeichnet, dass**
der Förderleitung (3) eine Fluidisiereinrichtung zugeordnet ist, und die Fluidisiereinrichtung einen Fluidisierkörper (6) mit einem Fluidisiergaskanal (8) und Fluidisiergasdurchlassmittel (9) zur Einspeisung eines Fluidisiergases aus dem Fluidisiergaskanal (8) in den Förderkanal (2), enthält.

2. Vorrichtung nach Anspruch 1, wobei die Druckgasdurchlassmittel (5) eine gasdurchlässige Trennwand zwischen Druckgaskanal (18) und Förderkanal (2) beinhalten.

3. Vorrichtung nach einem der Ansprüche 1 bis 2, wobei die Druckgasnebenleitung (4) ein im Scheitelbereich (15) innerhalb des Förderkanals (2) geführtes Druckluftrohr mit Gasdurchlassöffnungen ist.

4. Vorrichtung nach einem der Ansprüche 1 bis 3, wobei die Druckgasdurchlassmittel (5) Lochungen, Schlitzen, Perforierungen oder Poren in der Wandung der Druckgasnebenleitung (4) beinhalten.

5. Vorrichtung nach einem der Ansprüche 1 bis 4, wobei der Fluidisierkörper (6) im Solenbereich innerhalb des Förderkanals (2) angeordnet ist.

6. Vorrichtung nach einem der Ansprüche 1 bis 5, wobei die Fluidisiergasdurchlassmittel (9) eine gasdurchlässige Trennwand zwischen Fluidisiergaskanal (8) und Förderkanal (2) beinhalten.

7. Vorrichtung nach einem der Ansprüche 1 bis 6, wobei Fluidisiergasdurchlassmittel (9) eine mit Lochungen, Perforierungen oder Poren versehene Wandung des Fluidisiergaskanals (8) beinhalten.

8. Vorrichtung nach einem der Ansprüche 1 bis 7, wobei die Fluidisiereinrichtung Umlenkmittel (10) zum Umlenken des durch die Fluidisiergasdurchlassmittel (9) in den Förderkanal (2) austretenden Fluidisiergases enthält, wobei die Umlenkmittel (10) derart angeordnet sind, dass das umgelenkte Fluidisiergas eine Richtungskomponente entgegen der auf die Fördergutteilchen wirkenden Schwerkraft aufweist.

9. Vorrichtung nach Anspruch 8, wobei die Umlenkmittel (10) Umlenkelemente, wie ebene oder konkave Umlenkbleche bzw. -platten enthalten oder durch eine Wand des Förderkanals (2) ausgebildet sind.

10. Vorrichtung nach einem der Ansprüche 1 bis 9, wobei die Fluidisiergasdurchlassöffnungen derart ausgerichtet sind, dass das aus dem Fluidisiergaskanal (8) in den Förderkanal (2) austretende Fluidisiergas eine in Schwerkraftrichtung weisende Richtungskomponente beinhaltet.

11. Vorrichtung nach einem der Ansprüche 1 bis 10, wobei der Fluidisierkörper (6) ein den Fluidisiergaskanal (8) ausbildendes Fluidisiergasrohr (7) umfasst und die Fluidisiergasdurchlassmittel (9) Öffnungen, insbesondere Lochöffnungen, in der Wandung des Fluidisiergasrohres (7) beinhalten.

12. Vorrichtung nach einem der Ansprüche 1 bis 10, wobei die Fluidisiergasdurchlassmittel (29) ein textiles Flächengebilde umfassen.

13. Vorrichtung nach Anspruch 12, wobei das textile Flächegebilde derart angeordnet ist, dass das vom Fluidisiergaskanal (28) in den Förderkanal (22) austretende Fluidisiergas eine entgegen der Schwerkraftrichtung gerichtete Richtungskomponente aufweist.

14. Vorrichtung nach einem der Ansprüche 1 bis 13, wobei die Förderleitung (23) aus mehreren Förderleitungsabschnitten zusammengesetzt ist und der Fluidisiergaskanal (28) eine geschlossene, insbesondere an den beiden Stirnseiten geschlossene, Hohlkammer mit Öffnungen für die Fluidisiergaszufuhr und den Fluidisiergasdurchlass ausbildet.

15. Vorrichtung nach Anspruch 14, wobei jedem Förderleitungsabschnitt ein Fluidisierkörper zugeordnet ist, und die Fluidisierkörper der einzelnen Förderleitungsabschnitte nicht direkt miteinander verbunden sind.

16. Vorrichtung nach einem der Ansprüche 14 bis 15, wobei der Fluidisierkörper eines Förderleitungsabschnittes über das Fluidisiergaszufuhrleitungssystem mit den Fluidisierkörper wenigstens der benachbarten Förderleitungsabschnitte verbunden ist.

17. Vorrichtung nach einem der Ansprüche 14 bis 16, wobei der Fluidisierkörper gleich lang oder kürzer als der Förderleitungsabschnitt ist und vorzugsweise nicht über die endseitigen Stirnflächen der Förderleitungsabschnitte hinausragt.

18. Vorrichtung nach einem der Ansprüche 14 bis 17, wobei jedem Förderleitungsabschnitt ein, zwei oder mehrere die Förderleitung durchstossende und im Fluidisiergaskanal mündende Fluidisiergaszuleitungen (11) zugeordnet sind.

19. Verfahren zur Förderung eines schüttfähigen Materials unter Verwendung einer Vorrichtung nach einem der Ansprüche 1 bis 18,
**dadurch gekennzeichnet, dass**
das Fördergut in einem Druckbehälter (59) unter Druck gesetzt und aus dem Druckbehälter in die Förderleitung (54) gespiesen und mittels aus der Druckgasnebenleitung (4) von oben in den Förderkanal (2) gespiesenes Druckgas aufgelockert und über aus dem Fluidisiergaskanal (8) bodenwärtig in den Förderkanal (2) gespiesenes Fluidisiergas fluidisiert wird.

20. Verwendung der Vorrichtung nach einem der Ansprüche 1 bis 18 zur Förderung von Tonerde in der Aluminiumindustrie, insbesondere zur Speisung von Elektrolyseöfen mit Tonerde.

21. Verwendung der Vorrichtung nach einem der Ansprüche 1 bis 18 zur Förderung von Zement in der Zementindustrie.
